# FASCICULE DE BREVET EUROPEEN

(11) **EP 3 154 802 B1**
(45) Date de publication et mention de la délivrance du brevet: **15.08.2018**
(21) Numéro de dépôt: 15733810.4
(22) Date de dépôt: 05.06.2015
(51) Int. Cl.: B60H 1/00, B60H 1/28, B62D 25/08

(54) **SYSTÈME D'ALIMENTATION EN AIR FRAIS D'UN VÉHICULE AUTOMOBILE ET PROCÉDÉ DE MONTAGE DUDIT SYSTÈME D'ALIMENTATION DANS LE VÉHICULE AUTOMOBILE**
FRISCHLUFTZUFÜHRSYSTEM EINES KRAFTFAHRZEUGS UND VERFAHREN ZUR MONTAGE DES BESAGTEN ZUFÜHRSYSTEMS IN DEM KRAFTFAHRZEUG
FRESH-AIR SUPPLY SYSTEM OF A MOTOR VEHICLE AND METHOD FOR MOUNTING SAID SUPPLY SYSTEM IN THE MOTOR VEHICLE

(30) Priorité: 10.06.2014 FR 1455238
(43) Date de publication de la demande: 19.04.2017
(73) Titulaire: Renault S.A.S., 92100 Boulogne-Billancourt (FR)
(72) Inventeur: BERNAZZANI, Lucile, 92370 Chaville (FR); LE GOFF, Daniel, 78910 Orgerus (FR); GODARD, Pascal, 27300 Caorches Saint Nicolas (FR); THOMAS, Matthieu, 78590 Noisy Le Roi (FR); MAYEUR, Denis, 28260 Guainville (FR)
(86) Numéro de dépôt international: PCT/FR2015/051497
(87) Numéro de publication internationale: WO 2015/189506

(56) Documents cités:
- EP-A2- 2 067 691
- FR-A1- 2 917 044
- GB-A- 829 735
- JP-A- S61 196 817

## Description

La présente invention concerne le domaine des systèmes d'alimentation en air frais d'un véhicule automobile comprenant une boîte à eau et un conduit d'admission d'air composé d'un passage dans la structure du véhicule (corps creux) et communiquant avec l'habitacle du véhicule par l'intermédiaire d'une conduite et du système de ventilation, chauffage et/ou climatisation.

On entend par « boîte à eau », un réceptacle situé en partie inférieure du pare-brise à l'avant du véhicule automobile et sous le capot avant. La boîte à eau est destinée à recueillir les eaux de ruissellement s'écoulant du pare-brise avant et à séparer l'air de l'eau, l'eau étant évacuée vers l'extérieur par décantation dans la boîte à eau, tandis que l'air est canalisé vers l'habitacle du véhicule par un conduit d'admission d'air. La boîte à eau se présente généralement sous la forme d'une gouttière s'étendant de manière transversale à la direction longitudinale du véhicule automobile sur toute la largeur du véhicule et fixée à la doublure d'aile du véhicule.

La boîte à eau est généralement constituée d'une seule pièce, rendant sa mise en place très délicate à cause de l'encombrement grandissant de la partie supérieure du compartiment moteur.

D'autre part, il est fréquent que la boîte à eau doive être mise en place par-dessus un mécanisme d'essuie-vitres préalablement fixé, par exemple sur une traverse supérieure de tablier ou sur un autre élément de carrosserie. Il est donc nécessaire de pratiquer des ouvertures dans la boîte à eau afin d'y insérer les axes du mécanisme d'essuie-vitre, ce qui interdit tout déplacement de la boîte à eau suivant la direction transversale du véhicule.

Afin de remédier à ces inconvénients, on peut se référer aux documents FR 2 986 767 et FR 2 986 768 qui proposent une mise en place aisée de la boîte à eau indépendamment de l'architecture et de l'encombrement de la partie supérieure du compartiment moteur, grâce à un agencement pour véhicule automobile comprenant une boîte à eau présentant la forme générale d'une gouttière s'étendant transversalement à la direction longitudinale du véhicule comportant une partie centrale et deux parties d'extrémités de fermeture de la boîte à eau raccordées aux extrémités de la partie centrale et destinées à être fixées respectivement à une partie latérale de la caisse du véhicule. Le document EP2067691 divulgue un système d'alimentation selon la préambule de la revendication 1. Toutefois, les normes actuelles de sécurité étant de plus en plus renforcées, de même que l'encombrement du compartiment moteur est de plus en plus important, de sorte qu'il y a un besoin d'améliorer les systèmes d'alimentation en air frais existants.

L'objet de l'invention est d'améliorer les systèmes d'alimentation en air frais d'un véhicule automobile afin d'offrir une meilleur sécurité à un piéton victime d'une collision frontale avec le véhicule automobile. Cette invention permet de développer une zone sous le pare-brise déformable et/ou fusible qui permet de limiter les efforts subits par la tête d'un piéton lors d'un choc.

L'invention a pour objet un système d'alimentation en air frais d'un véhicule automobile comprenant une traverse inférieure de baie, s'étendant transversalement à la direction longitudinale du véhicule, destinée à supporter un pare-brise avant et disposée entre un capot avant et un tablier avant séparant l'habitacle du véhicule et le compartiment moteur. Ledit système d'alimentation en air frais comprend au moins une boîte à eau disposée en-dessous et à l'arrière du capot du véhicule automobile et devant le pare-brise avant et présentant en section droite un profil en forme de « U » ouvert vers le haut du véhicule automobile dont une partie s'étend suivant la direction longitudinale du véhicule sous la traverse inférieure de baie.

Ledit système d'alimentation en air frais comprend en outre au moins une boîte à air destinée à amener l'air frais depuis la boîte à eau vers un dispositif de ventilation, chauffage et/ou climatisation du véhicule automobile et un conduit de circulation d'air frais formé entre deux feuillures supérieure et inférieure de la traverse inférieure de baie, ladite traverse inférieure de baie comprenant au moins un orifice d'entrée d'air débouchant dans ladite boîte à eau et au moins un orifice de sortie d'air débouchant dans ladite boîte à air. Selon l'invention, la feuillure supérieure s'étend transversalement à la direction longitudinale du véhicule et une feuillure inférieure s'étend transversalement à la direction longitudinale du véhicule sensiblement parallèle à la feuillure supérieure tout en laissant subsister un espace vertical entre les feuillures formant le conduit de circulation d'air frais du système d'alimentation en air frais du véhicule, lesdites feuillures supérieure et inférieure étant fixées l'une à l'autre de manière étanche à l'air. Selon l'invention, la feuillure inférieure au moins un orifice de sortie d'air. Dans un autre mode de réalisation, l'orifice de sortie d'air est situé en partie arrière de la feuillure inférieure. Selon l'invention, l'orifice de sortie d'air s'étend dans un plan sensiblement parallèle au plan passant par l'axe longitudinal et transversal du véhicule, ledit orifice de sortie d'air étant associé à la boîte à air.

La feuillure inférieure peut comprendre, en partie avant, au moins un orifice d'entrée d'air s'étendant dans un plan sensiblement parallèle au plan passant par l'axe longitudinal et transversal du véhicule, ledit orifice d'entrée d'air étant associé à la boîte à eau.

Dans un mode de réalisation, la boîte à air présente en section droite un profil en forme substantielle de « L » comprenant une première extrémité ouverte débouchant dans le ou les orifices de sortie d'air et une deuxième extrémité ouverte, s'étendant dans un plan sensiblement parallèle au plan passant par l'axe transversal et vertical du véhicule, fixée sur le tablier avant et communiquant avec le dispositif de ventilation, chauffage et/ou climatisation.

Dans un mode de réalisation, la boîte à eau comprend une ouverture de réception d'eau et un fond en forme de cuvette afin de recueillir l'eau s'écoulant sur le pare-brise avant et un rebord périphérique destiné à venir se monter sur la surface inférieure de la traverse inférieure de baie.

L'ouverture de réception d'eau de la boîte à eau est, par exemple, en vis-à-vis d'une ouverture pratiquée dans un élément de carrosserie s'étendant transversalement à la direction longitudinale du véhicule et fixé à la traverse inférieure de baie. En variante, on pourrait prévoir que ledit élément de carrosserie soit une extension de la traverse inférieure de baie.

Le fond de la boîte à eau peut comprendre un orifice destiné à coopérer avec un tuyau d'évacuation de l'eau accumulée dans la boîte à eau afin de récupérer et évacuer l'eau provenant de l'extérieur.

Dans un mode de réalisation, le système d'alimentation en air frais comprenant un auvent prolongeant la forme extérieure du capot du véhicule fixé sur l'élément de carrosserie et comportant une grille d'auvent disposée au-dessus de la boîte à eau.

L'élément de carrosserie peut comprendre des logements pour la fixation de mécanismes d'essuie-glace.

Dans un mode de réalisation, le système d'alimentation en air frais comprend au moins deux boîtes à eau, par exemple identiques entre elles et disposées symétriquement par rapport à l'axe longitudinal du véhicule.

La feuillure inférieure peut comprendre, en partie avant, au moins quatre orifices d'entrée d'air, dont deux orifices d'entrée d'air sont associés à une boîte à eau.

Dans un mode de réalisation, le système d'alimentation en air frais comprend au moins deux boîtes à air, par exemple identiques entre elles et disposées symétriquement par rapport à l'axe longitudinal du véhicule. La feuillure inférieure de la traverse inférieure de baie peut comprendre, en partie arrière, deux orifices de sortie d'air débouchant chacun dans une des boîtes à air.

Les boîtes à eau et à air sont, par exemple, réalisées en matière plastique.

Selon un second aspect, l'invention concerne un véhicule automobile comprenant une traverse inférieure de baie, s'étendant transversalement à la direction longitudinale du véhicule, destinée à supporter un pare-brise avant et disposée entre un capot avant et un tablier avant séparant l'habitacle du véhicule et le compartiment moteur, et un système d'alimentation en air frais tel que décrit précédemment.

Selon un autre aspect, l'invention concerne un procédé de montage d'un système d'admission d'air frais tel que décrit précédemment dans un véhicule automobile comportant une traverse inférieure de baie, s'étendant transversalement à la direction longitudinale du véhicule, destinée à supporter un pare-brise avant et disposée entre un capot avant et un tablier avant séparant l'habitacle du véhicule et le compartiment moteur, comprenant une étape de fixation d'au moins une entrée d'air sur la traverse inférieure de baie et sur le tablier avant, une étape d'emmanchage d'un tuyau d'évacuation d'eau sur au moins une boîte à eau, une étape de fixation de la boîte à eau sur la traverse inférieure de baie, et une étape de mise en position d'un auvent fixé sur l'élément de carrosserie, au-dessus de la boîte à eau.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente très schématiquement une partie avant d'un véhicule automobile en perspective intégrant le système d'alimentation en air frais selon l'invention ;
- la figure 2 représente une vue en coupe longitudinale de la partie avant du véhicule automobile de la figure 1 ;
- la figure 3 représente une autre vue en coupe longitudinale de la partie avant du véhicule automobile de la figure 1 ;

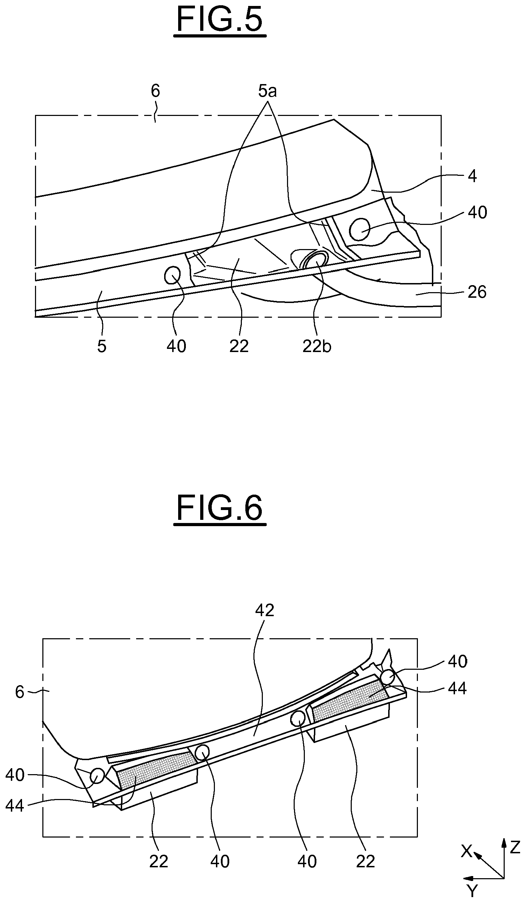

- les figures 4 à 6 illustrent des étapes de montage du système d'alimentation en air frais sur le véhicule.

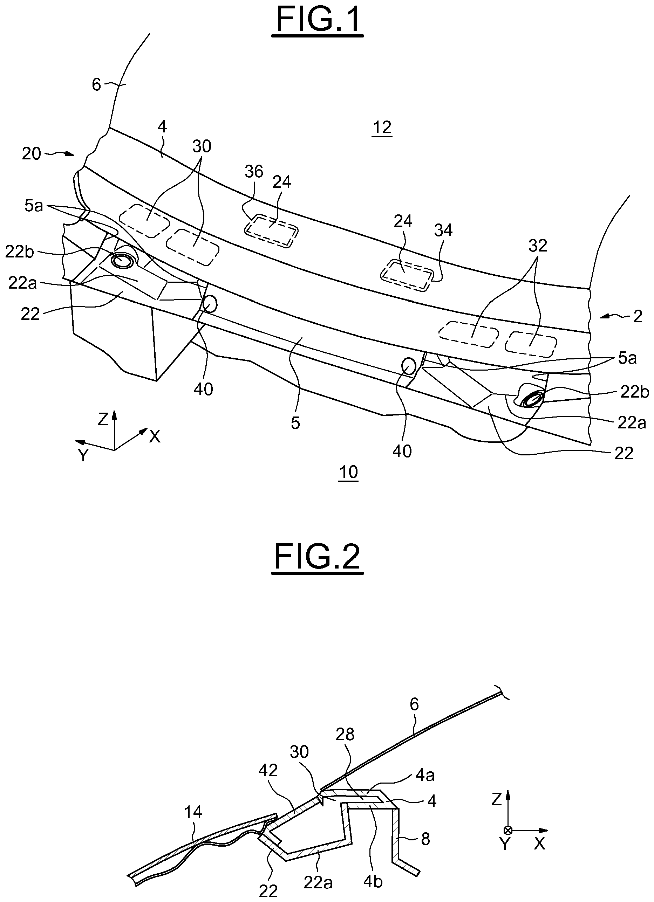

Dans la suite de la description, les termes « longitudinal », « transversal », « vertical », « avant », « arrière », « gauche » et « droite », s'entendent par rapport au repère orthogonal usuel des véhicules automobiles, représenté sur la figure 1, et comprenant :
- un axe longitudinal X, horizontal et dirigé de l'avant vers l'arrière du véhicule ;
- un axe transversal Y, horizontal, perpendiculaire à l'axe X et dirigé de gauche à droite du véhicule se déplaçant vers l'avant ;
- un axe Z, orthogonal aux axes X et Y et vertical dirigé de bas en haut.

Telle qu'illustrée schématiquement sur la figure 1, une partie avant 2 d'une caisse de véhicule automobile comprend une traverse inférieure de baie 4 s'étendant transversalement à la direction longitudinale X du véhicule automobile et destinée à supporter la partie inférieure d'un pare-brise avant 6. La traverse inférieure de baie 4 est reliée dans la direction longitudinale X du véhicule automobile à une cloison 8, appelée « tablier », séparant le compartiment moteur 10 de l'habitacle 12 du véhicule. Le compartiment moteur 10 est recouvert par un capot 14, monté de manière articulée par deux liaisons pivots (non représentées) sur les parties latérales du véhicule.

Le véhicule automobile comprend un système d'alimentation en air frais 20 destiné à alimenter en air extérieur un système de chauffage, ventilation et/ou climatisation (non représenté) lequel est situé dans une cloison pare feu dans la planche de bord (non représentés), derrière le tablier 8.

Tel qu'illustré, le système d'alimentation en air frais 20 comprend deux réceptacles ou boîtes à eau 22 identiques entre elles et disposées symétriquement par rapport à l'axe longitudinal X du véhicule et deux conduits d'air ou boîtes à air 24 disposées symétriquement par rapport à l'axe longitudinal X du véhicule.

On entend par « boîte à eau », un réceptacle situé en partie inférieure du pare-brise 6 à l'avant du véhicule automobile et sous le capot avant 14. Les boîtes à eau 22 sont destinées à recueillir les eaux de ruissellement s'écoulant du pare-brise 6 et à séparer l'air de l'eau, l'eau étant évacuée vers l'extérieur et/ou décantée dans la boîte à eau, tandis que l'air est canalisé vers l'habitacle du véhicule par les boîtes à air 24.

Telles qu'illustrées, les boîtes à eau 22 sont disposées en-dessous et à l'arrière du capot avant 14 du véhicule automobile et devant le pare-brise avant 6. On entend par « arrière » du capot avant 14, la partie se trouvant à proximité de l'habitacle 12, devant le pare-brise avant 6.

Telle qu'illustrée sur la figure 2, chaque boîte à eau 22 présente en section droite un profil en forme de U ouvert vers le haut du véhicule automobile en vis-à-vis d'une ouverture 5a pratiquée dans un élément de carrosserie appelé élément de liaison centrale 5 s'étendant dans la direction transversale Y du véhicule automobile et fixée à la traverse inférieure de baie 4. Une partie (non référencée) de la boîte à eau 22 s'étend suivant la direction longitudinale X du véhicule sous la traverse inférieure de baie 4.

Les boîtes à eau 22 comprennent chacune un fond 22a en forme de cuvette afin de recueillir l'eau s'écoulant sur le pare-brise avant 6 et un rebord périphérique (non référencé) destiné à venir se monter sur la surface inférieure de la traverse inférieure de baie 4, par exemple par encliquetage. Ainsi, les boîtes à eau 22 sont facilement démontables.

Tel qu'illustré, le fond 22a de la boîte à eau 22 comprend un orifice 22b destiné à coopérer avec un tuyau d'évacuation 26 de l'eau accumulée dans la boîte à eau 22 afin de récupérer l'eau provenant de l'extérieur et de l'évacuer vers le sol ou les côtés du véhicule automobile.

Un joint d'étanchéité (non représenté) peut être prévu sur le contour du rebord périphérique afin de réaliser une étanchéité entre la boîte à eau 22 et l'élément central de liaison 5 en vue d'étanchéifier le compartiment moteur 10.

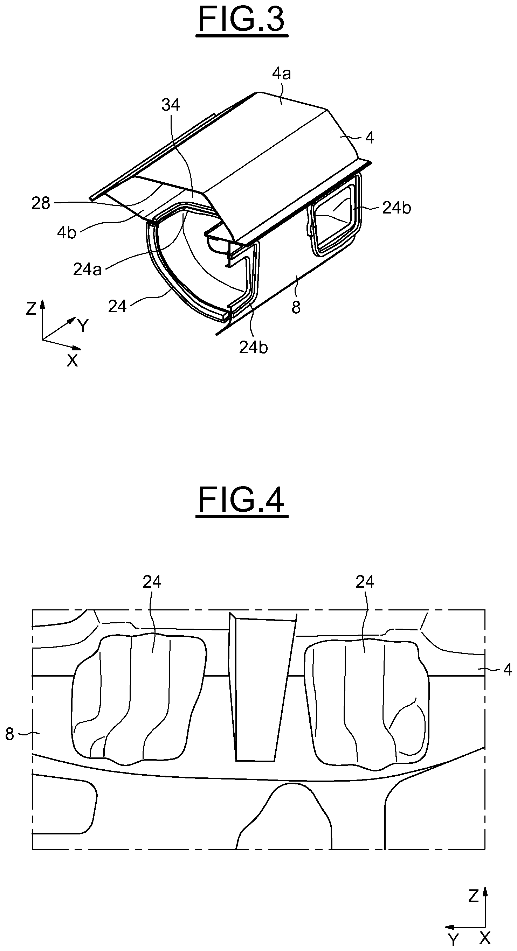

Telle qu'illustrée sur les figures 2 et 3, la traverse inférieure de baie 4 comprend une feuillure supérieure 4a s'étendant selon la direction transversale Y du véhicule et une feuillure inférieure 4b s'étendant selon la direction transversale Y du véhicule sensiblement, parallèle à la feuillure supérieure 4a tout en laissant subsister un espace vertical 28 entre les feuillures 4a, 4b formant un conduit de circulation d'air frais du système d'alimentation en air frais 20 du véhicule. Les feuillures supérieure et inférieure 4a, 4b sont fixées l'une à l'autre de manière étanche à l'air.

La feuillure inférieure 4b comprend, en partie avant, quatre orifices d'entrée d'air 30, 32, (illustrés en pointillés sur la figure 1) s'étendant dans un plan sensiblement parallèle au plan XY passant par l'axe longitudinal X et l'axe transversal Y du véhicule, deux orifices étant associés à une boîte à eau 22. L'air frais présent dans la boîte à eau 22 circule à travers les orifices d'entrée d'air 30, 32 associés vers le conduit de circulation d'air frais 28 entre les feuillures 4a, 4b.

A titre de variante, la feuillure inférieure 4b pourrait comprendre un orifice d'entrée d'air associé à une boîte à eau.

La feuillure inférieure 4b comprend, en partie arrière, deux orifices de sortie d'air 34, 36 (illustrés en pointillés sur la figure 1) s'étendant dans un plan sensiblement parallèle au plan XY passant par l'axe longitudinal X et l'axe transversal Y du véhicule, chaque orifice étant associé à une boîte à air 24 du système d'alimentation en air frais 20 du véhicule.

On entend par « boîte à air », un conduit d'air destiné à amener l'air frais depuis les boîtes à eau 22 vers un dispositif de ventilation, chauffage et/ou climatisation (non représenté). Les boîtes à air 24 servent donc de jonction entre le conduit de circulation d'air frais 28 et l'entrée du dispositif de ventilation, chauffage et/ou climatisation.

Telle qu'illustrée en détail sur la figure 3, chaque boîte à air 24 présente en section droite un profil en forme substantielle de « L » comprenant une première extrémité ouverte 24a située dans un plan sensiblement parallèle au plan XY et débouche dans le conduit de circulation d'air frais 28 formé entre les feuillures inférieure et supérieure 4b, 4a de la traverse inférieure de baie 4 par un orifice de sortie d'air 34. La boîte à air 24 comprend en outre une deuxième extrémité ouverte 24b, s'étendant dans un plan sensiblement parallèle au plan YZ passant par l'axe vertical Z et par l'axe transversal Y du véhicule, fixée sur le tablier avant 8 et débouchant à l'intérieur de l'habitacle du véhicule ou communiquant avec le dispositif de ventilation, chauffage et/ou climatisation.

Ainsi, l'air extérieur circule par les boîtes à eau 22 dans l'espace 28 formé entre les feuillures 4a, 4b de la traverse inférieure de baie 4 et sort à l'intérieur de l'habitacle par les boîtes à air 24.

Grace à l'architecture particulière du système d'alimentation en air frais, le passage vers l'habitacle de l'eau récupérée par les boîtes à eau se trouve empêché.

Les boîtes à eau 22 et à air 24 sont, par exemple, réalisées intégralement par moulage d'une matière plastique, par exemple rigide telle que du polyamide, éventuellement chargée de fibres de verre.

Telle qu'illustrée, l'élément central de liaison 5 comprend des logements 40 pour la fixation de mécanismes d'essuie-glace (non représentés).

Le système d'alimentation en air frais 20 comprend en outre un auvent 42 prolongeant la forme extérieure du capot avant 14 du véhicule comportant une grille d'auvent 44 disposée au-dessus de chaque boîte à eau 22.

Le système d'admission d'air frais du véhicule se monte dans la structure du véhicule automobile comme suit :
- fixation de chacune des entrées d'air sur la traverse inférieure de baie et sur le tablier avant avoir monté le système de essuie-vitres (non représenté) sur la structure,
- emmanchage du tuyau d'évacuation dans chacune des boîtes à eau et fixation des boîtes à eau sur la traverse inférieure de baie et l'élément de liaison central,
- mise en position de l'auvent sur la traverse inférieure de baie, au-dessus des boîtes à eau.

Grace à l'invention, il est possible d'adapter le système d'alimentation en air frais sur la ou les entrées d'air d'un dispositif de ventilation, chauffage et/ou climatisation.

De plus, la disposition de deux boîtes à eau de manière symétrique par rapport à l'axe longitudinal du véhicule permet une implantation dans le véhicule automobile plus aisée. La partie des boîtes à eau débouchant dans les orifices d'entrée d'air pratiqués dans la traverse inférieure de baie permet de réduire le nombre de pièces nécessaires à l'intégration d'entrées d'air indépendantes des boîtes à eau.

## Revendications

1. Système d'alimentation en air frais d'un véhicule automobile comprenant une traverse inférieure de baie (4), s'étendant transversalement à la direction longitudinale (X) du véhicule, destinée à supporter un pare-brise avant (6) et disposée entre un capot avant (14) et un tablier avant (8) séparant l'habitacle (12) du véhicule et le compartiment moteur (10), ledit système d'alimentation en air frais comprenant au moins une boîte à eau (22) disposée en-dessous et à l'arrière du capot avant (14) du véhicule automobile et devant le pare-brise avant (6) et présentant en section droite un profil en forme de « U » ouvert vers le haut du véhicule automobile dont une partie s'étend suivant la direction longitudinale (X) du véhicule sous la traverse inférieure de baie (4), le système d'alimentation comprenant au moins une boîte à air (24) destinée à amener l'air frais depuis la boîte à eau (22) vers un dispositif de ventilation, chauffage et/ou climatisation du véhicule automobile, un conduit de circulation d'air frais (28) formé entre deux feuillures supérieure et inférieure (4a, 4b) de la traverse inférieure de baie (4), ladite traverse inférieure de baie (4) comprenant au moins un orifice d'entrée d'air (30, 32) débouchant dans ladite boîte à eau (22) et au moins un orifice de sortie d'air (34, 36) débouchant dans ladite boîte à air (24), **caractérisé en ce que** la feuillure supérieure (4a) s'étend transversalement à la direction longitudinale (X) du véhicule et la feuillure inférieure (4b) s'étend transversalement à la direction longitudinale (X) du véhicule sensiblement parallèle à la feuillure supérieure (4a), tout en laissant subsister un espace vertical (28) entre les feuillures (4a, 4b) formant ledit conduit de circulation d'air frais du système d'alimentation en air frais du véhicule, lesdites feuillures supérieure et inférieure (4a, 4b) étant fixées l'une à l'autre de manière étanche à l'air, et **en ce que** la feuillure inférieure (4b) comprend au moins un orifice de sortie d'air (34, 36) s'étendant dans un plan sensiblement parallèle au plan (XY) passant par l'axe longitudinal (X) et transversal (Y) du véhicule, ledit orifice de sortie d'air (34,36) étant associé à la boîte à air (24).

2. Système d'alimentation en air frais selon la revendication 1, **caractérisé en ce que** l'orifice de sortie d'air (34, 36) est situé à l'arrière de la feuillure inférieure (4b).

3. Système d'alimentation en air frais selon la revendication 1 ou 2, **caractérisé en ce que** l'orifice de sortie d'air (34, 36) s'étend dans un plan sensiblement parallèle au plan (XY) passant par l'axe longitudinal (X) et transversal (Y) du véhicule, ledit orifice de sortie d'air (34,36) étant associé à la boîte à air (24)

4. Système d'alimentation en air frais selon la revendication 3, dans lequel la boîte à air (24) présente en section droite un profil en forme substantielle de « L » comprenant une première extrémité ouverte (24a) débouchant dans l'orifice de sortie d'air (34, 36) et une deuxième extrémité ouverte (24b), s'étendant dans un plan sensiblement parallèle au plan (YZ) passant par l'axe transversal (Y) et vertical (Z) du véhicule, fixée sur le tablier avant (8) et communiquant avec le dispositif de ventilation, chauffage et/ou climatisation.

5. Système d'alimentation en air frais selon l'une quelconque des revendications précédentes, dans lequel la feuillure inférieure comprend, en partie avant, au moins un orifice d'entrée d'air (30, 32) s'étendant dans un plan sensiblement parallèle au plan passant par l'axe longitudinal et transversal du véhicule, ledit orifice d'entrée d'air étant associé à la boîte à eau (22).

6. Système d'alimentation en air frais selon l'une quelconque des revendications précédentes, dans lequel la boîte à eau (22) comprend une ouverture de réception d'eau et un fond (22a) en forme de cuvette afin de recueillir l'eau s'écoulant sur le pare-brise avant (6) et un rebord périphérique destiné à venir se monter sur la surface inférieure de la traverse inférieure de baie (4).

7. Système d'alimentation en air frais selon la revendication 6, dans lequel l'ouverture de réception d'eau de la boîte à eau (22) est en vis-à-vis d'une ouverture (5a) pratiquée dans un élément de carrosserie (5) s'étendant transversalement à la direction longitudinale du véhicule et fixé à la traverse inférieure de baie (4).

8. Système d'alimentation en air frais selon la revendication 7, dans lequel le fond (22a) de la boîte à eau (22) comprend un orifice (22b) destiné à coopérer avec un tuyau d'évacuation (26) de l'eau accumulée dans la boîte à eau (22) afin de récupérer et évacuer l'eau provenant de l'extérieur.

9. Système d'alimentation en air frais selon la revendication 7 ou 8, comprenant un auvent (42), prolongeant la forme extérieure du capot (14) du véhicule, fixé sur l'élément de carrosserie (5) et comportant une grille d'auvent (44) disposée au-dessus de la boîte à eau (22).

10. Système d'alimentation en air frais selon l'une des revendications 7 à 9, dans lequel l'élément de carrosserie (5) comprend des logements (40) pour la fixation de mécanismes d'essuie-vitre.

11. Système d'alimentation en air frais selon l'une quelconque des revendications précédentes, comprenant au moins deux boîtes à eau (22).

12. Système d'alimentation en air frais selon l'une quelconque des revendications précédentes, comprenant au moins deux boîtes à air (24).

13. Système d'alimentation en air frais selon les revendications 11 et 12, dans lequel la feuillure inférieure (4b) comprend, en partie avant, au moins quatre orifices d'entrée d'air (30, 32) s'étendant dans un plan sensiblement parallèle au plan (XY) passant par l'axe longitudinal (X) et transversal (Y) du véhicule, deux orifices d'entrée d'air (30, 32) étant associés respectivement à une boîte à eau (22) et dans lequel la feuillure inférieure (4b) comprend, en partie arrière au moins deux orifices de sortie d'air (34,36), un orifice de sortie d'air étant associé à une boîte à air (4).

14. Système d'alimentation en air frais selon l'une quelconque des revendications précédentes, dans lequel les boîtes à eau (22) et à air (24) sont réalisées en matière plastique.

15. Véhicule automobile comprenant une traverse inférieure de baie (4), s'étendant transversalement à la direction longitudinale (X) du véhicule, destinée à supporter un pare-brise avant (6) et disposée entre un capot avant (14) et un tablier avant (8) séparant l'habitacle (12) du véhicule et le compartiment moteur (10), et un système d'alimentation en air frais (20) selon l'une quelconques des revendications précédentes.

16. Procédé de montage d'un système d'admission d'air frais (20) selon l'une quelconque des revendications 8 à 14 dans un véhicule automobile comportant une traverse inférieure de baie (4), s'étendant transversalement à la direction longitudinale (X) du véhicule, destinée à supporter un pare-brise avant (6) et disposée entre un capot avant (14) et un tablier avant (8) séparant l'habitacle (12) du véhicule et le compartiment moteur (10), comprenant :
- une étape de fixation d'au moins une entrée d'air (24) sur la traverse inférieure de baie (4) et sur le tablier (8) ;
- une étape d'emmanchage d'un tuyau d'évacuation (26) d'eau sur au moins une boîte à eau (22) ;
- une étape de fixation de la boîte à eau (22) sur la traverse inférieure de baie (4) ; et
- une étape de mise en position d'un auvent (42) fixé sur un élément central de liaison (5), au-dessus de la boîte à eau (22).

## Patentansprüche

1. Frischluftzuführsystem eines Kraftfahrzeugs, welches einen unteren Fensteröffnungsquerträger (4) umfasst, der sich quer zur Längsrichtung (X) des Fahrzeugs erstreckt, dazu bestimmt ist, eine vordere Windschutzscheibe (6) zu stützen, und zwischen einer Fronthaube (14) und einer vorderen Spritzwand (8), die den Innenraum (12) des Fahrzeugs und den Motorraum (10) trennt, angeordnet ist, wobei das Frischluftzuführsystem wenigstens einen Wasserkasten (22) umfasst, der unterhalb der Fronthaube (14) des Kraftfahrzeugs und hinten an dieser sowie vor der vorderen Windschutzscheibe (6) angeordnet ist und im Querschnitt ein zum oberen Teil des Kraftfahrzeugs hin offenes U-förmiges Profil aufweist, von dem ein Teil sich entlang der Längsrichtung (X) des Fahrzeugs unter dem unteren Fensteröffnungsquerträger (4) erstreckt, wobei das Zuführsystem wenigstens einen Luftkasten (24), der dazu bestimmt ist, die Frischluft von dem Wasserkasten (22) zu einer Lüftungs-, Heiz- und/oder Klimatisierungseinrichtung des Kraftfahrzeugs zu leiten, und eine Frischluft-Zirkulationsleitung (28), die zwischen einem oberen und einem unteren Falz (4a, 4b) des unteren Fensteröffnungsquerträgers (4) ausgebildet ist, umfasst, wobei der untere Fensteröffnungsquerträger (4) wenigstens eine Lufteintrittsöffnung (30, 32), die in den Wasserkasten (22) mündet, und wenigstens eine Luftaustrittsöffnung (34, 36), die in den Luftkasten (24) mündet, umfasst, **dadurch gekennzeichnet, dass** der obere Falz (4a) sich quer zur Längsrichtung (X) des Fahrzeugs erstreckt und der untere Falz (4b) sich quer zur Längsrichtung (X) des Fahrzeugs im Wesentlichen parallel zu dem oberen Falz (4a) erstreckt, wobei ein vertikaler Raum (28) zwischen den Falzen (4a, 4b) belassen wird, der die Frischluft-Zirkulationsleitung des Frischluftzuführsystems des Fahrzeugs bildet, wobei der obere und der untere Falz (4a, 4b) luftdicht aneinander befestigt sind, und dadurch, dass der untere Falz (4b) wenigstens eine Luftaustrittsöffnung (34, 36) umfasst, die sich in einer Ebene erstreckt, die im Wesentlichen parallel zu der durch die Längsachse (X) und die Querachse (Y) des Fahrzeugs verlaufenden Ebene (XY) ist, wobei die Luftaustrittsöffnung (34, 36) mit dem Luftkasten (24) verbunden ist.

2. Frischluftzuführsystem nach Anspruch 1, **dadurch gekennzeichnet, dass** sich die Luftaustrittsöffnung (34, 36) im hinteren Teil des unteren Falzes (4b) befindet.

3. Frischluftzuführsystem nach Anspruch 1 oder 2, **dadurch gekennzeichnet, dass** sich die Luftaustrittsöffnung (34, 36) in einer Ebene erstreckt, die im Wesentlichen parallel zu der durch die Längsachse (X) und die Querachse (Y) des Fahrzeugs verlaufenden Ebene (XY) ist, wobei die Luftaustrittsöffnung (34, 36) mit dem Luftkasten (24) verbunden ist.

4. Frischluftzuführsystem nach Anspruch 3, wobei der Luftkasten (24) im Querschnitt ein im Wesentlichen L-förmiges Profil aufweist, welches ein erstes offenes Ende (24a) umfasst, das in die Luftaustrittsöffnung (34, 36) mündet, und ein zweites offenes Ende (24b), das sich in einer Ebene erstreckt, die im Wesentlichen parallel zu der durch die Querachse (Y) und die vertikale Achse (Z) des Fahrzeugs verlaufenden Ebene (YZ) ist, an der vorderen Spritzwand (8) befestigt ist und mit der Lüftungs-, Heiz- und/oder Klimatisierungseinrichtung in Verbindung steht.

5. Frischluftzuführsystem nach einem der vorhergehenden Ansprüche, wobei der untere Falz im vorderen Teil wenigstens eine Lufteintrittsöffnung (30, 32) umfasst, die sich in einer Ebene erstreckt, die im Wesentlichen parallel zu der durch die Längs- und die Querachse des Fahrzeugs verlaufenden Ebene ist, wobei die Lufteintrittsöffnung mit dem Wasserkasten (22) verbunden ist.

6. Frischluftzuführsystem nach einem der vorhergehenden Ansprüche, wobei der Wasserkasten (22) eine Wasseraufnahmeöffnung und einen schalenförmigen Boden (22a) zum Sammeln des auf der vorderen Windschutzscheibe (6) fließenden Wassers umfasst, sowie einen Umfangsrand, der dazu bestimmt ist, an der Unterseite des unteren Fensteröffnungsquerträgers (4) angebracht zu werden.

7. Frischluftzuführsystem nach Anspruch 6, wobei sich die Wasseraufnahmeöffnung des Wasserkastens (22) gegenüber einer Öffnung (5a) befindet, die in einem Karosserieelement (5) ausgebildet ist, das sich quer zur Längsrichtung des Fahrzeugs erstreckt und an dem unteren Fensteröffnungsquerträger (4) befestigt ist.

8. Frischluftzuführsystem nach Anspruch 7, wobei der Boden (22a) des Wasserkastens (22) eine Öffnung (22b) umfasst, die dazu bestimmt ist, mit einem Ablaufrohr (26) für das im Wasserkasten (22) angesammelte Wasser zusammenzuwirken, um das von außen kommende Wasser aufzufangen und abzulassen.

9. Frischluftzuführsystem nach Anspruch 7 oder 8, welches einen Windlauf (42) umfasst, der die äußere Form der Haube (14) des Fahrzeugs verlängert, an dem Karosserieelement (5) befestigt ist und ein Windlaufgitter (44) aufweist, das über dem Wasserkasten (22) angeordnet ist.

10. Frischluftzuführsystem nach einem der Ansprüche 7 bis 9, wobei das Karosserieelement (5) Aufnahmen (40) zur Befestigung von Mechanismen der Scheibenwischer umfasst.

11. Frischluftzuführsystem nach einem der vorhergehenden Ansprüche, welches wenigstens zwei Wasserkästen (22) umfasst.

12. Frischluftzuführsystem nach einem der vorhergehenden Ansprüche, welches wenigstens zwei Luftkästen (24) umfasst.

13. Frischluftzuführsystem nach den Ansprüchen 11 und 12, wobei der untere Falz (4b) im vorderen Teil wenigstens vier Lufteintrittsöffnungen (30, 32) umfasst, die sich in einer Ebene erstrecken, die im Wesentlichen parallel zu der durch die Längsachse (X) und die Querachse (Y) des Fahrzeugs verlaufenden Ebene (XY) ist, wobei zwei Lufteintrittsöffnungen (30, 32) jeweils mit einem Wasserkasten (22) verbunden sind, und wobei der untere Falz (4b) im hinteren Teil wenigstens zwei Luftaustrittsöffnungen (34, 36) umfasst, wobei jeweils eine Luftaustrittsöffnung mit einem Luftkasten (4) verbunden ist.

14. Frischluftzuführsystem nach einem der vorhergehenden Ansprüche, wobei der Wasserkasten (22) und der Luftkasten (24) aus Kunststoff hergestellt sind.

15. Kraftfahrzeug, welches einen unteren Fensteröffnungsquerträger (4), der sich quer zur Längsrichtung (X) des Fahrzeugs erstreckt, dazu bestimmt ist, eine vordere Windschutzscheibe (6) zu stützen, und zwischen einer Fronthaube (14) und einer vorderen Spritzwand (8), die den Innenraum (12) des Fahrzeugs und den Motorraum (10) trennt, angeordnet ist, und ein Frischluftzuführsystem (20) nach einem der vorhergehenden Ansprüche umfasst.

16. Verfahren zur Montage eines Frischluftzuführsystems (20) nach einem der Ansprüche 8 bis 14 in einem Kraftfahrzeug, welches einen unteren Fensteröffnungsquerträger (4) aufweist, der sich quer zur Längsrichtung (X) des Fahrzeugs erstreckt, dazu bestimmt ist, eine vordere Windschutzscheibe (6) zu stützen, und zwischen einer Fronthaube (14) und einer vorderen Spritzwand (8), die den Innenraum (12) des Fahrzeugs und den Motorraum (10) trennt, angeordnet ist, umfassend:
- einen Schritt der Befestigung wenigstens einer Lufteintrittsvorrichtung (24) an dem unteren Fensteröffnungsquerträger (4) und an der Spritzwand (8) ;
- einen Schritt des Anschließens eines Wasserablaufrohres (26) an wenigstens einem Wasserkasten (22);
- einen Schritt der Befestigung des Wasserkastens (22) an dem unteren Fensteröffnungsquerträger (4); und
- einen Schritt der Positionierung eines Windlaufs (42), der an einem zentralen Verbindungselement (5) befestigt ist, über dem Wasserkasten (22).

## Claims

1. Fresh-air supply system of a motor vehicle comprising a lower windscreen crossmember (4) extending transversely to the longitudinal direction (X) of the vehicle and intended to support a front windscreen (6) and arranged between a front bonnet (14) and a front bulkhead (8) separating the passenger compartment (12) of the vehicle and the engine compartment (10), the said fresh-air supply system comprising at least one water box (22) arranged beneath and to the rear of the front bonnet (14) of the motor vehicle and in front of the front windscreen (6) and having in cross section a "U"-shaped profile which is open towards the top of the motor vehicle and of which a portion extends in the longitudinal direction (X) of the vehicle below the lower windscreen crossmember (4), the supply system comprising at least one air box (24) intended to feed fresh air from the water box (22) to a heating, ventilation and/or air-conditioning device of the motor vehicle, a fresh-air circulation duct (28) formed between two upper and lower rebates (4a, 4b) of the lower windscreen crossmember (4), the said lower windscreen crossmember (4) comprising at least one air-inlet orifice (30, 32) opening into the said water box (22) and at least one air-outlet orifice (34, 36) opening into the said air box (24), **characterized in that** the upper rebate (4a) extends transversely to the longitudinal direction (X) of the vehicle and the lower rebate (4b) extends transversely to the longitudinal direction (X) of the vehicle substantially parallel to the upper rebate (4a), while leaving a vertical space (28) between the rebates (4a, 4b) forming the said fresh-air circulation duct of the fresh-air supply system of the vehicle, the said upper and lower rebates (4a, 4b) being fastened to one another in an airtight manner, and **in that** the lower rebate (4b) comprises at least one air-outlet orifice (34, 36) extending in a plane substantially parallel to the plane (XY) passing through the longitudinal axis (X) and transverse axis (Y) of the vehicle, the said air-outlet orifice (34, 36) being associated with the air box (24).

2. Fresh-air supply system according to Claim 1, **characterized in that** the air-outlet orifice (34, 36) is situated to the rear of the lower rebate (4b).

3. Fresh-air supply system according to Claim 1 or 2, **characterized in that** the air-outlet orifice (34, 36) extends in a plane substantially parallel to the plane (XY) passing through the longitudinal axis (X) and transverse axis (Y) of the vehicle, the said air-outlet orifice (34, 36) being associated with the air box (24).

4. Fresh-air supply system according to Claim 3, in which the air box (24) has in cross section a substantially "L"-shaped profile comprising a first open end (24a) opening into the air-outlet orifice (34, 36) and a second open end (24b) extending in a plane substantially parallel to the plane (YZ) passing through the transverse axis (Y) and vertical axis (Z) of the vehicle and fastened to the front bulkhead (8) and communicating with the heating, ventilation and/or air-conditioning device.

5. Fresh-air supply system according to any one of the preceding claims, in which the lower rebate comprises, at the front, at least one air-inlet orifice (30, 32) extending in a plane substantially parallel to the plane passing through the longitudinal and transverse axis of the vehicle, the said air-inlet orifice being associated with the water box (22).

6. Fresh-air supply system according to any one of the preceding claims, in which the water box (22) comprises an opening for receiving water and a bottom (22a) in the form of a cup in order to collect the water flowing on the front windscreen (6) and a peripheral rim intended to be mounted on the lower surface of the lower windscreen crossmember (4).

7. Fresh-air supply system according to Claim 6, in which the opening for receiving water of the water box (22) is opposite an opening (5a) made in a body element (5) extending transversely to the longitudinal direction of the vehicle and fastened to the lower windscreen crossmember (4).

8. Fresh-air supply system according to Claim 7, in which the bottom (22a) of the water box (22) comprises an orifice (22b) intended to cooperate with a discharge pipe (26) for the water accumulated in the water box (22) in order to recover and discharge the water emanating from the outside.

9. Fresh-air supply system according to Claim 7 or 8, comprising a cowl (42) extending the outer shape of the bonnet (14) of the vehicle and fastened to the body element (5) and comprising a cowl grille (44) arranged above the water box (22).

10. Fresh-air supply system according to one of Claims 7 to 9, in which the body element (5) comprises housings (40) for fastening windscreen wiper mechanisms.

11. Fresh-air supply system according to any one of the preceding claims, comprising at least two water boxes (22) .

12. Fresh-air supply system according to any one of the preceding claims, comprising at least two air boxes (24).

13. Fresh-air supply system according to Claims 11 and 12, in which the lower rebate (4b) comprises, at the front, at least four air-inlet orifices (30, 32) extending in a plane substantially parallel to the plane (XY) passing through the longitudinal axis (X) and transverse axis (Y) of the vehicle, two air-inlet orifices (30, 32) being associated respectively with a water box (22), and in which the lower rebate (4b) comprises, at the rear, at least two air-outlet orifices (34, 36), one air-outlet orifice being associated with an air box (4).

14. Fresh-air supply system according to any one of the preceding claims, in which the water boxes (22) and air boxes (24) are made of plastic.

15. Motor vehicle comprising a lower windscreen crossmember (4) extending transversely to the longitudinal direction (X) of the vehicle and intended to support a front windscreen (6) and arranged between a front bonnet (14) and a front bulkhead (8) separating the passenger compartment (12) of the vehicle and the engine compartment (10), and a fresh-air supply system (20) according to any one of the preceding claims.

16. Method for mounting a fresh-air intake system (20) according to any one of Claims 8 to 14 in a motor vehicle comprising a lower windscreen crossmember (4) extending transversely to the longitudinal direction (X) of the vehicle and intended to support a front windscreen (6) and arranged between a front bonnet (14) and a front bulkhead (8) separating the passenger compartment (12) of the vehicle and the engine compartment (10), comprising:
- a step of fastening at least one air inlet (24) to the lower windscreen crossmember (4) and to the bulkhead (8) ;
- a step of fitting a water discharge pipe (26) to at least one water box (22);
- a step of fastening the water box (22) to the lower windscreen crossmember (4); and
- a step of positioning a cowl (42) fastened to a central connection element (5), above the water box (22).
